# EUROPEAN PATENT SPECIFICATION

(11) **EP 2 995 196 B1**
(45) Date of publication and mention of the grant of the patent: **08.05.2019**
(21) Application number: 15190590.8
(22) Date of filing: 17.03.2011
(51) Int. Cl.: A01K 11/00

(54) **AN IMPROVED IDENTIFICATION TAG APPLICATOR**
VERBESSERTER APPLIKATOR FÜR INFORMATIONSETIKETTEN
APPLICATEUR D'ÉTIQUETTE D'IDENTIFICATION AMÉLIORÉ

(30) Priority: 18.03.2010 GB 201004520
(43) Date of publication of application: 16.03.2016
(62) Divisional of application: 11715729.7
(73) Proprietor: Datamars S.A., 6814 Lamone (CH)
(72) Inventor: EADIE, Brian, Selkirk Borders TD7 5LU (GB)
(74) Representative: Murgitroyd & Company

(56) References cited:
- EP-A1- 0 055 127
- EP-A2- 1 452 089
- FR-A- 1 264 837
- FR-A5- 2 106 705

## Description

The present invention is directed to the field of identification tags, and provides an improved applicator for applying such tags to articles, objects and animals.

Existing identification tags, especially those applied to livestock, are typically formed from moulded plastics. These tags usually have first and second body portions which can be folded relative to one another to close the tag. One body portion will have a piercing pin, and when the tag is folded the pin will pass through an appendage of the animal (e.g. an ear) and into a corresponding aperture on the second body portion of the tag. The pin locks in the aperture and the tag is thus secured to the animal.

In existing tag applicators these tags are usually flat when they are loaded into the jaws of the applicator, whether the loading is by hand directly into the jaws or via a semi-automatic tag delivery mechanism. In either case the applicator operator has to use a significant amount of the available hand movement just to squeeze a lever or trigger enough that the applicator folds the tag to a point where it is ready for application. This leaves little hand movement available to generate the force required to push the pin of the tag through the appendage of an animal and/or its locking aperture. One solution previously presented in order to reduce the amount of hand movement required for the initial folding motion was to form the tags already partially closed, with an angle of say 135 degrees between the first and second body portions of the tag. However, this solution had several drawbacks. Firstly, the forming of the tags could be inconsistent with sets of tags having different shapes when removed from the mould, such that individual tags or groups of tags may have varying angles between the body portions. At best this can require the operator to fold the sets of tags by hand into the required shape to fit into the delivery mechanism of semi-automatic applicators, and at worst can cause tags to jam in the delivery mechanisms. The second drawback with these pre-formed tags was that they still required a portion of the hand movement available to the operator to be used folding the tag to an appropriate point for application, rather than allowing the operator to use all available movement to force the tag closed around or through an object or appendage.

Semi-automatic applicators use tag delivery mechanisms in order to deliver successive tags into the applicator jaws, preferably immediately after the preceding tag has been applied. These delivery mechanisms can be problematic in that the members used to push the tags towards the applicator jaws can sometimes engage the wrong part of a tag, resulting in mis-feeding of the tags into the jaws and/or jamming of the delivery mechanism. A further problem can result in that some delivery mechanisms prevent the tags yet to be applied from being pulled back from the jaws and out of the mechanism. Thus, leftover tags have to be pulled through the mechanism, which risks injury to the operator given that most of these applicators rely on a sharp cutting blade adjacent the jaws in order to detach the applied tag from those remaining in the mechanism. Alternatively, all tags in the mechanism have to be applied, or at least folded and closed, before a new set of tags can be introduced into the mechanism.

A further drawback of certain types of applicator is that the mechanism for retracting or releasing the applicator jaw(s) is part of the mechanism which applies the tag. This can limit the power available to close and apply a tag if the application mechanism has to both apply the tag and then release the jaws thereafter.

FR2106705A, FR1264837A and EP055127A show examples of prior art applicators for applying individual identification tags to animals. EP1452089A shows an example of a prior art applicator from the present applicant which may deliver and apply multiple tags to animals.

It is an aim of the present invention to obviate or mitigate one or more of the aforementioned disadvantages.

According to the present invention, there is provided an identification tag applicator comprising:
a body having a pair of applicator jaws attached thereto, wherein one of the jaws is pivotable relative to the body;
a manually-operated actuator pivotably attached to the body and adapted to move the pivotable applicator jaw between open and closed positions;
wherein the actuator comprises:
   a lever having a first lever end pivotably attached to the body, and a second lever end;
   a lever biasing member which biases the lever towards a first position in which the pivotable jaw is in the open position;
   a first link member having a first link end pivotably attached to the pivotable applicator jaw, and a second link end having a first locking surface; and
   a second link member having a third link end which is pivotably attached to the second lever end, and a fourth link end which has a second locking surface and which is pivotably attached to the second link end;
   wherein when the lever is in the first position the first and second link members lie in the same plane and the first and second locking surfaces abut one another to hold the link members in the same plane as the lever is moved from the first position, and the second and fourth link ends are connected by a link pin which is offset from the plane of the link members; and
   wherein the second applicator jaw includes a projecting member adapted to force the link members to pivot relative to one another about the link pin so that link members move out of the plane when the applicator jaws reach a closed position.

A preferred embodiment of the present invention will now be described, by way of example only, with reference to the accompanying drawings, in which:
Figures 1(a)-1(d) show various views of an identification tag applicator;
Figures 2(a)-2(d) show cross sections through a tag guide of the tag applicator along the lines A-A, B-B, C-C and D-D, respectively, as shown in Figure 1(d);
Figures 3(a) and 3(b) show a tag delivery mechanism of the tag applicator in operation;
Figures 4(a)-4(c) show more detailed views of the delivery mechanism in operation; and
Figures 5(a)-5(e) show the tag applicator at various stages during the application of a tag.

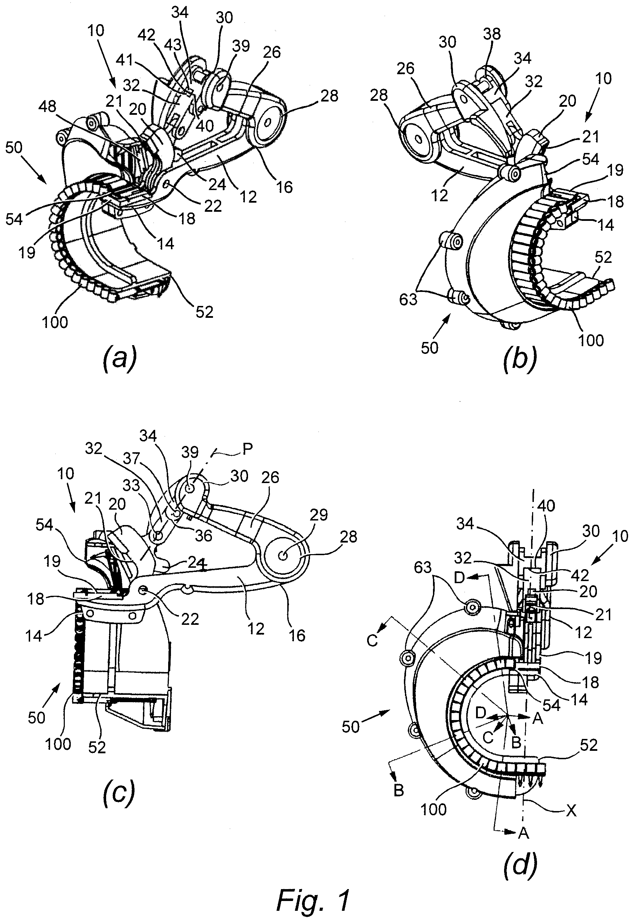

Figures 1(a) and 1(b) show projected views of either side of an identification tag applicator in accordance with the present invention. Figures 1(c) and 1(d) show side and front views, respectively, of the applicator. The applicator, generally designated 10, comprises an elongate body 12 having a first end 14 and a second end 16. Fixed to the first end 14 of the body 12 is a first applicator jaw 18. A second applicator jaw 20 is pivotably attached to the first end 14 of the body 12 by a pivot pin 22, so that the second jaw 20 may pivot about the pivot pin 22 relative to the body 12 and close on top of the first jaw 18. The first and second jaws 18,20 have first and second application surfaces 19,21, respectively. The application surfaces 19,21 are the inner surfaces of the jaws 18,20 which will compress and fold a tag when it is being applied to an object or animal. A biasing member (not shown) is located between the second jaw 20 and body 12 in order to bias the second jaw 20 away from the first jaw 18. As best seen in Figure 1(c), the second jaw 20 includes a projecting member 24 which projects from the upper surface of the second jaw 20, i.e. the surface on the opposite side of the second jaw 20 from its application surface 21.

The applicator 10 may further comprise an actuator for manually closing and opening the applicator jaws 18,20. As again best seen in Figure 1(c), the actuator comprises a lever 26, which has a first end 28 pivotably attached to the second end 16 of the body 12 about a second pivot pin 29. A biasing member (not shown) biases the lever 26 away from the body 12. The upper surface of the lever 26 and the lower surface of the body 12 form the two parts of a hand grip for an operator, where the lever 26 and body 12 are squeezed together by an operator to operate the applicator 10. The actuator further comprises first and second link members 32,34 which link a second end 30 of the lever 26 with the second jaw 20.

The first link member 32 has a first end which is pivotably attached to the second jaw 20 by a first link pin 33, and a second end which is pivotably attached to the second link member 34 by a second link pin 37. The second link member 34 has first and second ends 36,38, where the first end 36 is attached to the first link member 32 by the second link pin 37, and the second end 38 is pivotably attached to the second end 30 of the lever 26 by a third link pin 39. In this way, the first link member 32 may pivot about the first link pin 33 relative to the second jaw 20, and the second link member 34 may pivot about the third link pin 39 relative to the lever 26. However, the first and second link members 32,34 are adapted such that the maximum possible angle between the link members 32,34 is substantially 180 degrees. This is achieved by providing first and second locking surfaces 40,42 on the adjacent ends of the first and second link members 32,34, and by offsetting the second link pin 37 towards the second pivot pin 29 connecting the body 12 and lever 26.

The offset location of the second link pin 37 can be clearly seen in Figure 1(c), which shows the applicator 10 in its rest position, with the second jaw 20 and lever 26 being biased into their open positions by their respective biasing members (not shown). In this rest, or open, position the first and second link members 32,34 are substantially aligned, with the link members 32,34 and first and third link pins 33,39 lying in the same plane P. It can be seen in Figure 1(c) that the second link pin 37 lies to one side of the plane P, such that the link pin 37 is closer to the second pivot pin 29 than either the first or third link pins 33,39. This arrangement ensures that the first and second link members 32,34 remain aligned with one another during the closing of the applicator jaw 20 under the action of the lever 26. The various stages in the tag application operation will be explained in more detail below.

One of the locking surfaces, for example the first locking surface 40, may include a magnetic member 41. The other of the locking surfaces, for example the second locking surface 42, may include a magnet 43 adapted to attract the magnetic member 41. As a result, the magnetic member 41 and magnet 43 ensure that the locking surfaces 40,42 remain abutting one another and the link members 32,34 remain aligned until the link members 32,34 are forced to pivot relative to one another, as will be described in more detail below.

The applicator 10 further comprises a tag delivery mechanism which delivers a number of tags successively into the applicator jaws 18,20. The delivery mechanism includes a delivery member (not shown in Figure 1) which engages the successive tags and forces them towards the jaws 18,20, and a tag guide 50 which guides the tags towards the jaws 18,20 under the action of the delivery member. As the tags are connected to one another when they are formed and subsequently loaded into the applicator 10, the delivery member's engagement of the tag closest to the jaws 18,20 pulls the remaining tags through the guide 50 towards the jaws 18,20. A cutting blade 48 is attached to the second jaw 20, such that the blade will cut away the tag located in the jaws 18,20 from the remaining tags. The position of the cutting blade on the second jaw 20 is selected such that the blade will cut away the first tag just as that tag is applied to an object or animal. A more detailed description of the operation of the tag delivery mechanism will be set out below.

The guide 50 has a remote first end 52 into which the tags are loaded, and a second end 54 proximate the applicator jaws 18,20 from where successive tags enter the jaws 18,20 for application. A group of interconnected tags 100 is shown located in the guide in Figure 1. The applicator jaws 18, 20 both lie in a plane X which extends through the applicator 10, as shown in Figure 1(d). The guide 50 is curved back on itself such that it is generally C-shaped when viewed from the front. As a result, the first end 52 of the guide 50 extends through the plane X.

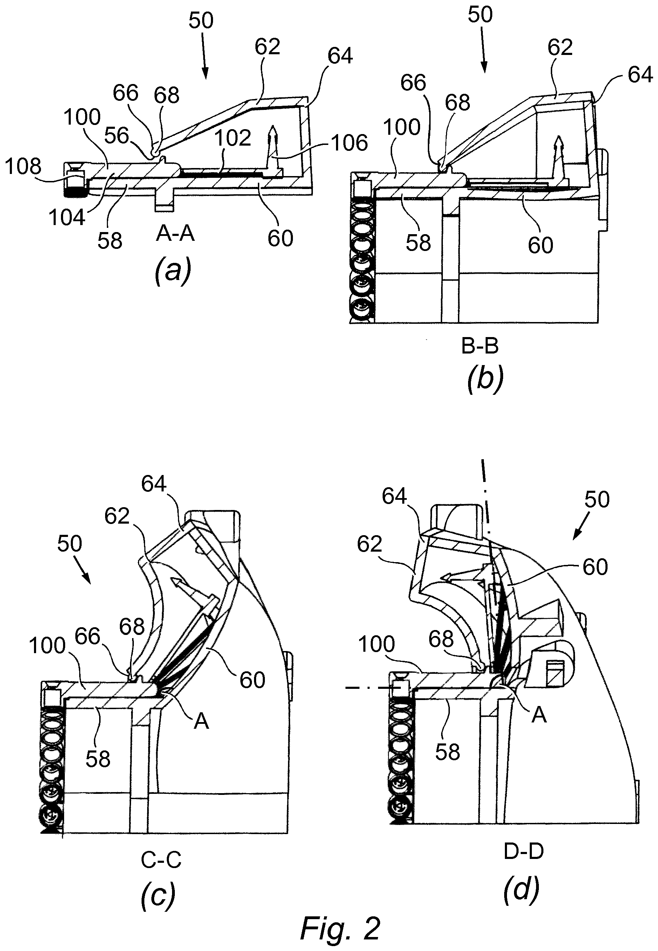

Figures 2(a)-2(d) show sections taken through the guide 50 at various points along its length, along the lines A-A, B-B, C-C and D-D shown in Figure 1(d). The front of the guide 50 has an open slot 56, from which a portion of each tag 100 protrudes. The guide 50 also has an internal guide surface for guiding respective portions of each tag 100. The guide surface may comprise first and second internal guide surfaces 58,60 and the guide 50 may also include a cover 62 which covers at least the second guide surface 60 along the length of the guide 50. The cover 62 is attached along its back side 64 to the second guide surface 60 by a number of fixtures 63, and has a free front edge 66 suspended above the first and second guide surfaces 58,60. The slot 56 is defined between the first guide surface 58 and the front edge 66 of the cover 62. The front edge 66 of the cover 62 may include a guide rib 68 to assist in guiding the tags 100 through the guide 50.

Figure 2 also shows the preferred type of tag 100 applied by the applicator 10. The tag 100 has first and second body portions 102,104 which are adapted to fold relative to one another. The first body portion 102 has a piercing pin 106 adapted to pierce an object or appendage, while the second body portion 104 has a locking aperture 108 through which at least part of the pin then passes in order to lock the two portions 102,104 together.

As can be seen from the section view provided by Figure 2(a), adjacent the first end 52 of the guide 50 the first and second guide surfaces 58,60 are substantially flat and co-planar with an angle between them of substantially 180 degrees. This remains the case approximately one-third of the way through the guide 50, as seen in Figure 2(b). However, the guide 50 has an internal geometry such that between section B-B (figure 2(b)) and the second end 54 of the guide 50, the second guide surface 60 progressively inclines relative to the first guide surface 58 in both the longitudinal and transverse directions. As a result, an angle A is created in the transverse direction between the first and second guide surfaces 58,60, as shown in Figure 2(c).

It will be noted that the second guide surface 60 is generally concave in figures 2(c) and 2(d). For the avoidance of doubt, the references to first and second guide surfaces herein refer to the portions of the internal surfaces of the guide which contact and guide the tag as it passes through the guide 50. Therefore, in instances where either one or both of the guide surfaces is not substantially flat, the angle A is to be measured between the points on the guide surfaces 58,60 where the tags contact the guide surfaces 58,60. As shown in figure 2(d), at the second end 54 of the guide 50, the angle A is less than 90 degrees.

The first and second guide surfaces 58,60 are thus adapted to guide and fold at least a first portion of a tag relative to a second portion of the tag as the tag progresses towards the second end 54 of the guide 50. The applicant has established that a preferred range for angle A at the first end 52 of the guide 50 is between 135 and 180 degrees, and is most preferably 180 degrees so that the tags enter the guide 50 substantially flat. It has also been established that the preferred range of angle A at the second end 54 of the guide 50 is between 80 and 135 degrees, and is most preferably between 80 and 90 degrees.

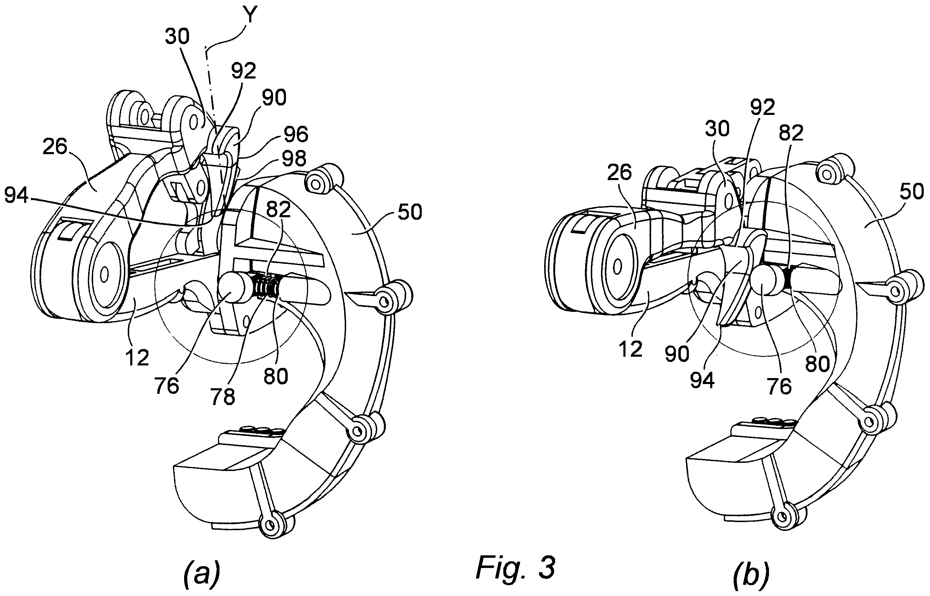

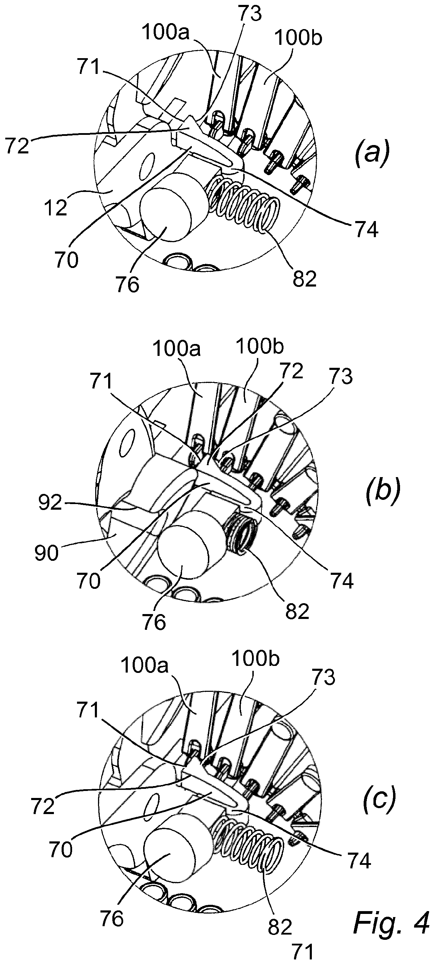

Figures 3 and 4 illustrate the tag delivery mechanism in more detail. Figures 3(a) and 3(b) show the mechanism being operated at the same time as a tag is being applied via the applicator jaws. Figures 4(a)-4(c) show the delivery member of the mechanism in more detail, where the tag guide has been removed for illustrative purposes. The tag delivery member is preferably a resilient pawl 70 having a free end 72 for engaging the tags 100 and a fixed end 74 attached to a cam follower 76. The follower 76 is rotatably and slidingly supported on a shaft 78 which is received in a locating aperture 80 in the outer surface of the guide 50. The shaft 78 has also been removed in figures 4(a)-4(c) for illustrative purposes. The cam follower 76 also has a guide member (not shown) which locates in a slot (not shown) in the guide 50 in order to guide the sliding follower 76 along the shaft 78. The slot has an elongate guide portion running in the direction of the applicator body 12, and a release portion located at the end of the guide portion closest to the applicator body 12. The release portion is a continuation of the slot which is substantially at right angles to the guide portion. The release portion allows the cam follower 76 and pawl 70 to be partially rotated about the shaft 78 into a release position where the pawl 70 is no longer in contact with the tags 100 in the guide 50. The tags 100 can thus be pulled back out of the guide 50 when the follower 76 and pawl 70 are in the release position. A biasing member 82 is located on the shaft 78 between the cam follower 76 and the locating aperture 80 and biases the follower 76 and pawl 70 towards the applicator body 12.

As seen best in Figures 3(a) and 3(b), a cam 90 is attached to the second end 30 of the lever 26 on the side of the lever closest to the tag delivery mechanism. The cam 90 may be elongate and have a first end 92 attached to the actuator and a second end 94 remote from the actuator. The cam 90 may have a first cam surface 96 proximate the first end 92 of the cam 90, and a second cam surface 98 proximate the second end 94 of the cam 90.

The cam 90 operates in a cam plane Y which is substantially parallel with the plane X of the applicator jaws 18,20. The first cam surface 96 lies at a first angle relative to the cam plane Y, and the second cam surface 98 lies at a second angle relative to the cam plane Y, and the second angle is greater than the first angle. In other words, an angle between the cam plane Y and a tangent to any portion of the first cam surface is less than an angle between the cam plane Y and a tangent to any portion of the second cam surface.

Consequently, initial contact between the second cam surface 98 and cam follower 76 as the lever 26 descends will quickly push the cam follower 76 and pawl 70 away from the applicator body 12 against the force of the biasing member 82, before the first cam surface 96 contacts the cam follower 76 and slows the rate at which the follower 76 moves away from the applicator body. Releasing the lever 26 will result in the follower 76 and pawl 70 returning towards the body 12 under the force of the biasing member 82 as the cam 90 rises and the cam surfaces 96,98 come out of contact with the follower 76.

With particular reference to figures 4(a)-4(c), it can be seen that the free end 72 of the pawl has an engagement surface 71 and an indexing surface 73. The engagement surface 71 faces towards the applicator body 12, whilst the indexing surface 73 faces towards the tags 100 in the tag guide 50 but lies at an acute angle to both the engagement surface 71 and the direction of travel of the tags 100. The angled indexing surface 73 means that the free end 72 of the pawl 70 is consequently wedge-shaped, with the thinner end of the wedge facing away from the applicator body 12.

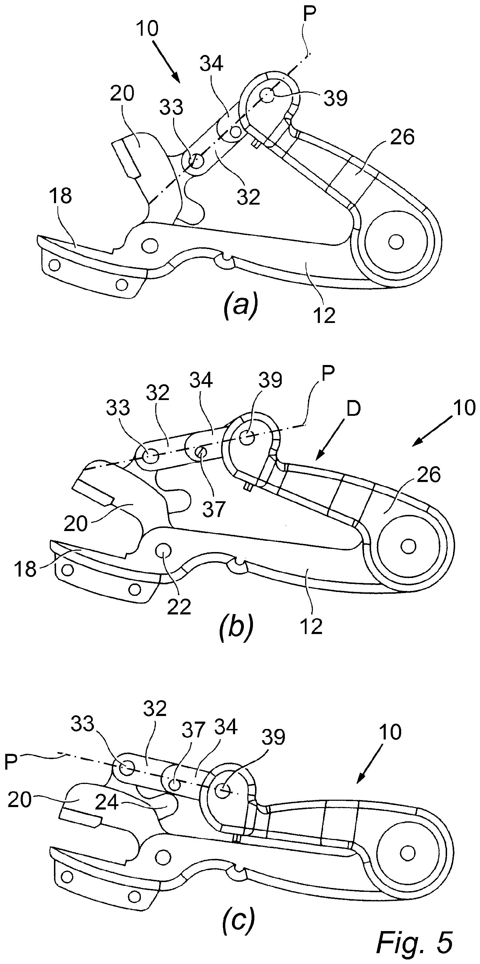

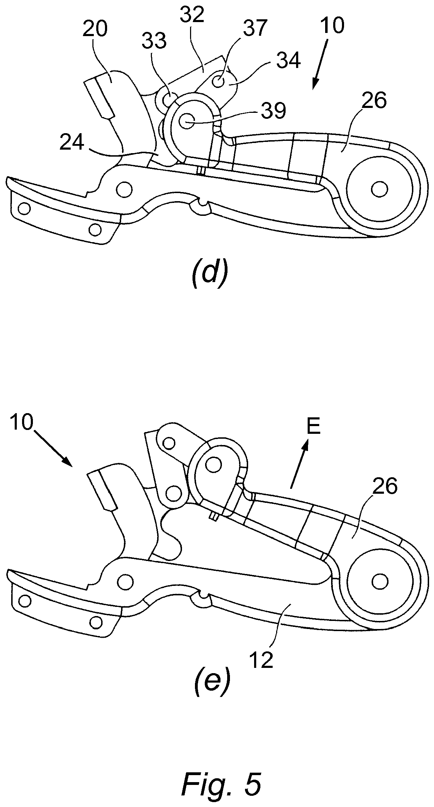

The manner in which the tag applicator 10 operates will now be described, with particular reference to figures 4 and 5. Figures 5(a)-5(e) show side views of the applicator 10 during the various stages of a tag application operation. It will be apparent that the tags, tag guide and other components making up the tag delivery mechanism have been removed from the figure 5 illustrations for illustrative purposes.

As previously shown in figure 1(c), figure 5(a) shows the applicator 10 in its rest position. In this position, the second jaw 20 and lever 26 are being biased away from the first jaw 18 and body 12, respectively, by their respective biasing members (not shown). Consequently, the first and second link members 32,34 and the first and third link pins 33,39 are all aligned along the plane P. In the rest position shown in figure 5(a), the tag delivery mechanism is in the position shown in figure 4(a).

Figure 5(b) shows the applicator 10 as the actuator lever 26 is pressed towards the body 12 in the direction of arrow D. Thanks to the previously described abutment surfaces (not shown in figure 5) of the link members 32,34 and the offset second link pin 37, the link members 32,34 and first and third link pins 33,39 remain aligned along a single plane P as the lever 26 travels towards the body 12. At the same time, the link members 32,34 begin to press the second jaw 20 towards the first jaw 18 against the biasing force of the second jaw biasing member. The second jaw 20 thus pivots about its pivot pin 22 towards the first jaw 18.

Figure 5(c) shows the applicator 10 at the point at which a tag will be applied to an object or animal. At this point, the tag will have been folded over to such an extent that the projecting pin on the first body portion will have pierced the object or appendage and now be locked in the locking aperture on the second body portion of the tag. Again, the link members 32,34 and link pins 33,39 remain aligned along a single plane P, but it will be noted that the projecting member 24 on upper surface of the second jaw 20 is now immediately adjacent the second link member 34 and link pin 37.

As can be seen in figure 4(b), as the lever 26 reaches the end of its travel the cam 90 attached thereto has contacted the cam follower 76 and pushed it away from the body 12 against the force of the biasing member 82. As the follower 76 is pushed away it will move the pawl 72 away from the applicator jaws and its rest position shown in figure 4(a). As the pawl 72 moves away, its indexing surface 73 will come into contact with the next tag 100a ready for delivery to the applicator jaws. As the indexing surface 73 is at an acute angle to the direction of travel of both the tags and follower 76, the pawl 70 will be pressed towards the follower 76 as it moves past the tag 100a. Once the pawl 70 and follower 76 have moved past the tag 100a, the resilience of the pawl 70 will push it out so as to be behind the tag 100a. This position is shown in figure 4(b), where the pawl 70 now lies between the first and second tags 100a,100b in the guide and the tag engagement surface 73 of the pawl 70 is poised to engage with the back of the first tag 100a when the cam 90 releases the follower 76 and pawl 70.

Immediately after the applicator has reached the position shown in figure 5(c), the projecting member 24 comes into contact with the second link member 34. The contact of the projecting member 24 on the second link member 34 overcomes the stabilising effect of the offset second link pin 37, thereby instantly breaking the alignment of the link members 32,34 and link pins 33,39 along the single plane P. The link members 32,34 then quickly pivot about the second link pin 37 as the linkage can no longer offer any resistance to the biasing force of the second jaw biasing member forcing the second jaw 20 back to its fully open position. The result of this motion is shown in figure 5(d), where it can be seen that the second jaw 20 has now returned to its fully open position despite the lever 26 still being held closed by an operator.

Figure 5(e) shows the applicator with the lever 26 in the process of being released by the operator. The lever 26 is thus returning to its open, or rest, position in the direction of arrow E under the action of the biasing member located between the body 12 and the lever 26. As the lever 26 is being released, the cam 90 rises and allows the cam follower 76 and pawl 70 to be pressed back towards the applicator jaws by the biasing member 82. This position is shown in figure 4(c), where the engagement surface 71 of the pawl 70 is forcing the first tag 100a towards the jaws of the applicator under the action of the biasing member 82. The tag 100a will enter the jaws of the applicator as the applicator returns to the position shown in figure 5(a), ready for the next tag to be applied. Referring back to figure 2, the progressive reduction in the angle A between the first and second guide surfaces 58,60 over the course of the guide 50 ensures that the tags are automatically folded to the desired application state as they enter the jaws 18,20 for application.

The present invention provides an identification tag applicator where substantially flat tags and/or tags having a relatively large angle between their body portions (e.g. 135-180 degrees) can be loaded into a semi-automatic delivery mechanism which folds the tags as they pass through the tag guide. Thus, no bending of the tags is necessary before they are loaded into the present invention and there is no need for inconsistently-formed "pre-bent" tags. Furthermore, the operator does not need to waste any of the available hand movement folding the tags in the applicator jaws to a point where the tag is ready to be applied. Instead, they can use all the available hand movement to get the tag to penetrate the object or appendage to be tagged, and to lock the tag thereto.

The present invention also provides a relatively simple tag delivery mechanism, where the resilient pawl accurately engages each successive tag and delivers it to the applicator jaws. Linking the actuator lever and delivery mechanism via the cam and cam follower arrangement also ensures that application of a tag and delivery of the next tag into the applicator jaws is achieved in a single, "squeeze and release" action by an operator. Additionally, the pivoting release action available to the cam follower and pawl means that the pawl can be quickly and simply disengaged from any tags in the guide. Thus, the tags can be pulled backwards out of the guide via the first end and the operator consequently does not need to apply all the tags in the guide before changing to a different type of tag, for example.

A further advantage of the present invention is provided by the actuation link arrangement connecting the lever and second applicator jaw. This arrangement allows an extremely powerful application force to be applied to the applicator jaw, but also provides a very simple release mechanism in the form of the projecting member on the pivoting jaw. The release by the projecting member breaking the link is thus independent of the application mechanism, and consequently does not compromise the application power available. Furthermore, with only two link members connecting the lever and second jaw, the chances of malfunction or failure of the apparatus are significantly reduced compared with the relatively complex release arrangements disclosed in previous proposals.

A modified embodiment of the present invention may be provided which incorporates the actuation link arrangement but not necessarily the tag guide and other components of the tag delivery mechanism. In other words, the present invention may also be provided as a single tag applicator without the need for the semi-automated tag delivery mechanism. The modified embodiment is as shown in Figures 5(a)-(e) and comprises the body 12 having a first end and a second end, as well as the pair of applicator jaws 18,20 attached to the first end of the body. As in the embodiment described above there is a manually-operated actuator pivotably attached to the second end of the body 12 which is adapted to close the applicator jaws 18,20, and a first biasing member which biases the actuator towards a position in which the jaws 18,20 are open. The actuator itself comprises the lever 26 having a first end pivotably attached to the body 12, the first link member 32 pivotably attached to the pivotable applicator jaw 20, and the second link member 34 having a first end pivotably attached to the first link member 32, and a second end pivotably attached to the lever 26. This actuation link arrangement is connected together and operates as described above, wherein the first and second link members 32,34 may not pivot relative to one another through more than substantially 180 degrees, and the second applicator jaw 20 includes the projecting member 24 adapted to force the link members 32,34 to pivot relative to one another when the applicator jaws 18,20 reach the closed position. This modified embodiment may also comprise the tag delivery mechanism and guide arrangement described above if the semi-automated delivery arrangement was required.

Although the tag guide which may form part of the present invention is preferably curved, whereby the free first end passes through the plane in which the applicator jaws lie, the present invention is not limited to this arrangement. For example, the guide may instead be substantially straight and extend out perpendicular to the applicator body. However, for the avoidance of doubt, the changes in the internal geometry of the guide surfaces would be the same whatever the overall shape of the guide.

The tag application mechanism of the preferred embodiment comprises a pair of applicator jaws and an actuator arrangement made up of a pivoting lever and a pair of link members. However, the present invention is not limited to such an application mechanism. For example, the pivoting second jaw could be replaced by a spring-loaded plunger, where the plunger would push the pin of the first portion of a part-folded tag through the object or appendage and into locking engagement with the locking aperture on the second portion of the tag. The plunger could be operated by an actuator in the form of a pivoting trigger instead of a lever.

Instead of having a resilient pawl and cam follower, the tag delivery mechanism may comprise a delivery member in the form of a rotating gearwheel selectively rotated by the actuator. The gearwheel would include teeth to engage the tags in the tag guide, whereby rotation of the gearwheel by the actuator would engage and push the successive tags into the application mechanism.

These and other modifications and improvements may be incorporated without departing from the scope of the present invention, as defined by the following claims.

## Claims

1. An identification tag applicator (10) comprising:
a body (12) having a pair of applicator jaws (18,20) attached thereto, wherein one of the jaws is pivotable relative to the body;
a manually-operated actuator pivotably attached to the body (12) and adapted to move the pivotable applicator jaw (20) between open and closed positions;
wherein the actuator comprises:
a lever (26) having a first lever end (28) pivotably attached to the body (12), and a second lever end (30);
a lever biasing member which biases the lever (26) towards a first position in which the pivotable jaw (20) is in the open position;
a first link member (32) having a first link end pivotably attached to the pivotable applicator jaw (20), and a second link end having a first locking surface (40); **characterized in that**
a second link member (34) has a third link end (38) which is pivotably attached to the second lever end, and a fourth link end (36) which has a second locking surface (42) and which is pivotably attached to the second link end;
wherein when the lever (26) is in the first position the first and second link members lie in the same plane and the first and second locking surfaces (40,42) abut one another to hold the link members in the same plane as the lever is moved from the first position, and the second and fourth link ends are connected by a link pin (37) which is offset from the plane (P) of the link members (32,34); and
wherein the pivotable applicator jaw (20) includes a projecting member (24) adapted to force the link members (32,34) to pivot relative to one another about the link pin (37) so that link members move out of the plane (P) when the applicator jaws (18,20) reach a closed position.

2. The applicator of claim 1, wherein the pivotable applicator jaw (20) is biased towards the open position by a jaw biasing member.

3. The applicator of either preceding claim, wherein one of the first and second locking surfaces (40,42) houses a magnetic member (41), and the other of the first and second locking surfaces houses a magnet (43) adapted to attract the magnetic member.

4. The applicator of any preceding claim, and further comprising a tag delivery mechanism adapted to deliver a plurality of successive tags to the applicator jaws, the delivery mechanism comprising:
a delivery member adapted to engage and force successive tags towards the jaws (18,20); and
a tag guide (50) adapted to guide the successive tags into the applicator jaws (18,20) under the action of the delivery member;
wherein the tag guide (50) has a first end (52) into which tags are loaded, a second end (54) from which the tags enter the jaws (18,20), and an internal guide surface adapted to guide and fold at least a first portion of each tag relative to a second portion of each tag as the tag progresses towards the second end of the guide.

5. The applicator of claim 4, wherein the internal guide surface comprises first and second guide surfaces (58,60), and an angle defined by the first and second guide surfaces is between 135 and 180 degrees at the first end (52) of the guide and reduce progressively to between 80 and 135 degrees at the second end (54) of the guide.

6. The applicator of claim 5, wherein the angle between the first and second guide surfaces (58,60) at the first end (52) of the guide is substantially 180 degrees, and the angle between the guide surfaces at the second end (54) of the guide is between 80 and 110 degrees.

7. The applicator of either claim 5 or claim 6, wherein the tag guide comprises a cover member (62) having a free end (66), and a fixed end (64) attached to the second guide surface (60), wherein a guide slot (56) is defined between the free end of the cover member and the first guide surface (58).

8. The applicator of claim 7, wherein the free end (66) of the cover member (62) includes a guide rib (68) adapted to engage the or each tag in the guide (50).

9. The applicator of any of claims 4 to 8, wherein the applicator jaws (18,20) lie in a jaw plane (X), and the tag guide (50) is curved such that the first end (52) of the guide passes through the jaw plane.

10. The applicator of any of claims 4 to 9, wherein the delivery member is operated by the actuator, wherein the actuator moves the pivotable applicator jaw (20) to the closed position in a first movement, and operates the delivery member in a second movement following the first movement.

11. The applicator of any of claims 4 to 10, wherein the delivery member comprises a resilient pawl (70) slidingly supported on a shaft (78) and biased towards the applicator jaws (18,20) by a pawl biasing member (82).

12. The applicator of claim 11, wherein the tag guide (50) includes a guide slot adapted to guide the sliding pawl (70) towards the applicator jaws (18,20), and wherein the pawl is rotatably supported on the shaft (78) and the guide slot includes a release portion at one end thereof, the release portion being substantially perpendicular to the guide slot in order to allow the pawl to be selectively pivoted on the shaft out of engagement with the tags.

13. The applicator of either claim 11 or claim 12, wherein the actuator includes a cam (90) adapted to force the delivery member away from the applicator jaws (18,20) during the first movement against the force of the pawl biasing member (82).

14. The applicator of claim 13, wherein the cam (90) is elongate and has a first end (92) attached to the actuator and a second end (94) remote from the actuator and adapted to act upon the delivery member, and the cam has a first cam surface (96) proximate the first end of the cam, and a second cam surface (98) proximate the second end of the cam, wherein the cam operates in a cam plane (Y), the first cam surface lies at a first angle relative to the cam plane, and the second cam surface lies at a second angle relative to the cam plane, and the second angle is greater than the first angle.

## Patentansprüche

1. Ein Identifikationsetiketten-Applikator (10), der Folgendes beinhaltet:
einen Körper (12), an dem ein Paar Applikatorbacken (18, 20) angebracht ist, wobei eine der Backen relativ zu dem Körper schwenkbar ist;
einen manuell betätigten Aktuator, der schwenkbar an dem Körper (12) angebracht ist und angepasst ist, um die schwenkbare Applikatorbacke (20) zwischen einer offenen und einer geschlossenen Position zu bewegen;
wobei der Aktuator Folgendes beinhaltet:
einen Hebel (26), der ein erstes Hebelende (28), das schwenkbar an dem Körper (12) angebracht ist, und ein zweites Hebelende (30) aufweist;
ein Hebelvorspannelement, das den Hebel (26) in Richtung einer ersten Position vorspannt, in der sich die schwenkbare Backe (20) in der offenen Position befindet;
ein erstes Verbindungselement (32), das ein erstes Verbindungsende, das schwenkbar an der schwenkbaren Applikatorbacke (20) angebracht ist, und ein zweites Verbindungsende, das eine erste Verriegelungsoberfläche (40) aufweist, aufweist;
**dadurch gekennzeichnet, dass**
ein zweites Verbindungselement (34) ein drittes Verbindungsende (38), das schwenkbar an dem zweiten Hebelende angebracht ist, und ein viertes Verbindungsende (36), das eine zweite Verriegelungsoberfläche (42) aufweist und das schwenkbar an dem zweiten Verbindungsende angebracht ist, aufweist;
wobei, wenn sich der Hebel (26) in der ersten Position befindet, das erste und das zweite Verbindungselement in der gleichen Ebene liegen und die erste und die zweite Verriegelungsoberfläche (40, 42) aneinanderstoßen, um die Verbindungselemente in der gleichen Ebene zu halten, wenn der Hebel aus der ersten Position bewegt wird, und wobei das zweite und vierte Verbindungsende durch einen Verbindungsstift (37) verbunden sind, der von der Ebene (P) der Verbindungselemente (32, 34) versetzt ist; und
wobei die schwenkbare Applikatorbacke (20) ein vorstehendes Element (24) umfasst, das angepasst ist, um die Verbindungselemente (32, 34) dazu zu zwingen, relativ zueinander um den Verbindungsstift (37) zu schwenken, sodass sich die Verbindungselemente aus der Ebene (P) bewegen, wenn die Applikatorbacken (18, 20) eine geschlossene Position erreichen.

2. Applikator gemäß Anspruch 1, wobei die schwenkbare Applikatorbacke (20) durch ein Backenvorspannelement in Richtung der offenen Position vorgespannt ist.

3. Applikator gemäß einem der vorhergehenden Ansprüche, wobei eine der ersten und zweiten Verriegelungsoberflächen (40, 42) ein magnetisches Element (41) unterbringt und die andere der ersten und zweiten Verriegelungsflächen einen Magneten (43) unterbringt, der angepasst ist, um das magnetische Element anzuziehen.

4. Applikator gemäß einem der vorhergehenden Ansprüche, und ferner beinhaltend einen Etikettenabgabemechanismus, der angepasst ist, um eine Vielzahl von aufeinanderfolgenden Etiketten an die Applikatorbacken abzugeben, wobei der Abgabemechanismus Folgendes beinhaltet:
ein Abgabeelement, das angepasst ist, um in aufeinanderfolgende Etiketten einzugreifen und diese in Richtung der Backen (18, 20) zu zwingen; und
eine Etikettenführung (50), die angepasst ist, um die aufeinanderfolgenden Etiketten unter der Wirkung des Abgabeelements in die Applikatorbacken (18, 20) zu führen;
wobei die Etikettenführung (50) ein erstes Ende (52), in das Etiketten geladen werden, ein zweites Ende (54), aus dem die Etiketten in die Backen (18, 20) eintreten, und eine innere Führungsoberfläche, die angepasst ist, um mindestens einen ersten Abschnitt jedes Etiketts relativ zu einem zweiten Abschnitt jedes Etiketts zu führen und zu falten, wenn das Etikett in Richtung des zweiten Endes der Führung hin fortschreitet, aufweist.

5. Applikator gemäß Anspruch 4, wobei die innere Führungsoberfläche eine erste und eine zweite Führungsoberfläche (58, 60) beinhaltet und wobei ein Winkel, der von der ersten und der zweiten Führungsoberfläche definiert ist, an dem ersten Ende (52) der Führung zwischen 135 und 180 Grad liegt und sich an dem zweiten Ende (54) der Führung allmählich auf zwischen 80 und 135 Grad reduziert.

6. Applikator gemäß Anspruch 5, wobei der Winkel zwischen der ersten und der zweiten Führungsoberfläche (58, 60) an dem ersten Ende (52) der Führung im Wesentlichen 180 Grad beträgt und der Winkel zwischen den Führungsoberflächen an dem zweiten Ende (54) der Führung zwischen 80 und 110 Grad beträgt.

7. Applikator gemäß Anspruch 5 oder Anspruch 6, wobei die Etikettenführung ein Abdeckelement (62), das ein freies Ende (66) und ein festes Ende (64), das an die zweite Führungsoberfläche (60) angebracht ist, aufweist, beinhaltet, wobei ein Führungsschlitz (56) zwischen dem freien Ende des Abdeckelements und der ersten Führungsoberfläche (58) definiert ist.

8. Applikator gemäß Anspruch 7, wobei das freie Ende (66) des Abdeckelements (62) eine Führungsrippe (68) umfasst, die angepasst ist, um mit der oder jeder Etikette in der Führung (50) in Eingriff zu kommen.

9. Applikator gemäß einem der Ansprüche 4 bis 8, wobei die Applikatorbacken (18, 20) in einer Backenebene (X) liegen und die Etikettenführung (50) derart gekrümmt ist, dass das erste Ende (52) der Führung durch die Backenebene verläuft.

10. Applikator gemäß einem der Ansprüche 4 bis 9, wobei das Abgabeelement durch den Aktuator betätigt wird, wobei der Aktuator die schwenkbare Applikatorbacke (20) in einer ersten Bewegung in die geschlossene Position bewegt und das Abgabeelement in einer zweiten Bewegung, die der ersten Bewegung folgt, betätigt.

11. Applikator gemäß einem der Ansprüche 4 bis 10, wobei das Abgabeelement eine elastische Klinke (70) beinhaltet, die gleitend auf einer Welle (78) getragen wird und durch ein Klinkenvorspannelement (82) in Richtung der Applikatorbacken (18, 20) vorgespannt ist.

12. Applikator gemäß Anspruch 11, wobei die Etikettenführung (50) einen Führungsschlitz umfasst, der angepasst ist, um die Gleitklinke (70) in Richtung der Applikatorbacken (18, 20) zu führen, und wobei die Klinke drehbar auf der Welle (78) getragen wird und der Führungsschlitz an einem Ende davon einen Freigabeabschnitt umfasst, wobei der Freigabeabschnitt im Wesentlichen senkrecht zu dem Führungsschlitz liegt, um zu ermöglichen, dass die Klinke selektiv auf der Welle aus dem Eingriff mit den Etiketten geschwenkt wird.

13. Applikator gemäß Anspruch 11 oder Anspruch 12, wobei der Aktuator einen Nocken (90) umfasst, der angepasst ist, um das Abgabeelement während der ersten Bewegung gegen die Kraft des Klinkenvorspannelements (82) von den Applikatorbacken (18, 20) wegzudrücken.

14. Applikator gemäß Anspruch 13, wobei der Nocken (90) länglich ist und ein erstes Ende (92), das an dem Aktuator angebracht ist, und ein zweites Ende (94), das von dem Aktuator entfernt liegt und angepasst ist, um auf das Abgabeelement einzuwirken, aufweist, und wobei der Nocken eine erste Nockenoberfläche (96) in der Nähe des ersten Endes des Nockens und eine zweite Nockenoberfläche (98) in der Nähe des zweiten Endes des Nockens aufweist, wobei der Nocken in einer Nockenebene (Y) tätigt ist, wobei die erste Nockenoberfläche in einem ersten Winkel relativ zu der Nockenebene liegt und die zweite Nockenoberfläche in einem zweiten Winkel relativ zu der Nockenebene liegt und der zweite Winkel größer als der erste Winkel ist.

## Revendications

1. Un applicateur d'étiquette d'identification (10) comprenant :
un corps (12) ayant une paire de mâchoires d'applicateur (18, 20) attachées à celui-ci, l'une des mâchoires pouvant pivoter relativement au corps ;
un actionneur à commande manuelle attaché au corps (12) de manière à pouvoir pivoter et conçu pour déplacer la mâchoire d'applicateur pouvant pivoter (20) entre des positions ouverte et fermée ;
où l'actionneur comprend :
une manette (26) ayant une première extrémité de manette (28) attachée au corps (12) de manière à pouvoir pivoter, et une deuxième extrémité de manette (30) ;
un élément de sollicitation de manette qui sollicite la manette (26) en direction d'une première position dans laquelle la mâchoire pouvant pivoter (20) est dans la position ouverte ;
un premier élément de liaison (32) ayant une première extrémité de liaison attachée de manière à pouvoir pivoter à la mâchoire d'applicateur pouvant pivoter (20), et une deuxième extrémité de liaison ayant une première surface de verrouillage (40) ;
**caractérisé en ce que**
un deuxième élément de liaison (34) a une troisième extrémité de liaison (38) qui est attachée de manière à pouvoir pivoter à la deuxième extrémité de manette, et une quatrième extrémité de liaison (36) qui a une deuxième surface de verrouillage (42) et qui est attachée de manière à pouvoir pivoter à la deuxième extrémité de liaison ;
où lorsque la manette (26) est dans la première position, les premier et deuxième éléments de liaison se situent dans le même plan et les première et deuxième surfaces de verrouillage (40, 42) sont en aboutement l'une contre l'autre afin de maintenir les éléments de liaison dans le même plan tandis que la manette est déplacée depuis la première position, et les deuxième et quatrième extrémités de liaison sont raccordées par une tige de liaison (37) qui est excentrée par rapport au plan (P) des éléments de liaison (32, 34) ; et
où la mâchoire d'applicateur pouvant pivoter (20) inclut un élément faisant saillie (24) conçu pour forcer les éléments de liaison (32, 34) à pivoter l'un relativement à l'autre autour de la tige de liaison (37) de sorte que les éléments de liaison se déplacent hors du plan (P) lorsque les mâchoires d'applicateur (18, 20) atteignent une position fermée.

2. L'applicateur de la revendication 1, où la mâchoire d'applicateur pouvant pivoter (20) est sollicitée en direction de la position ouverte par un élément de sollicitation de mâchoire.

3. L'applicateur de l'une ou l'autre revendication précédente, où une surface parmi la première et la deuxième surface de verrouillage (40, 42) abrite un élément magnétique (41), et l'autre surface parmi la première et la deuxième surface de verrouillage abrite un aimant (43) conçu pour attirer l'élément magnétique.

4. L'applicateur de n'importe quelle revendication précédente, et comprenant en outre un mécanisme de distribution d'étiquette conçu pour distribuer une pluralité d'étiquettes successives aux mâchoires d'applicateur, le mécanisme de distribution comprenant :
un élément de distribution conçu pour se mettre en prise et pousser des étiquettes successives vers les mâchoires (18, 20) ; et
un guide-étiquette (50) conçu pour guider les étiquettes successives dans les mâchoires d'applicateur (18, 20) sous l'action de l'élément de distribution ;
où le guide-étiquette (50) a une première extrémité (52) dans laquelle des étiquettes sont chargées, une deuxième extrémité (54) depuis laquelle les étiquettes entrent dans les mâchoires (18, 20), et une surface de guide interne conçue pour guider et plier au moins une première portion de chaque étiquette relativement à une deuxième portion de chaque étiquette tandis que l'étiquette avance vers la deuxième extrémité du guide.

5. L'applicateur de la revendication 4, où la surface de guide interne comprend des première et deuxième surfaces de guide (58, 60), et un angle défini par les première et deuxième surfaces de guide fait entre 135 et 180 degrés au niveau de la première extrémité (52) du guide et se réduit progressivement à entre 80 et 135 degrés au niveau de la deuxième extrémité (54) du guide.

6. L'applicateur de la revendication 5, où l'angle entre les première et deuxième surfaces de guide (58, 60) au niveau de la première extrémité (52) du guide fait substantiellement 180 degrés, et l'angle entre les surfaces de guide au niveau de la deuxième extrémité (54) du guide fait entre 80 et 110 degrés.

7. L'applicateur de soit la revendication 5, soit la revendication 6, où le guide-étiquette comprend un élément de couverture (62) ayant une extrémité libre (66), et une extrémité fixe (64) attachée à la deuxième surface de guide (60), où une fente de guide (56) est définie entre l'extrémité libre de l'élément de couverture et la première surface de guide (58).

8. L'applicateur de la revendication 7, où l'extrémité libre (66) de l'élément de couverture (62) inclut une nervure de guide (68) conçue pour se mettre en prise avec la ou chaque étiquette dans le guide (50).

9. L'applicateur de n'importe lesquelles des revendications 4 à 8, où les mâchoires d'applicateur (18, 20) se situent dans un plan de mâchoire (X), et le guide-étiquette (50) est incurvé de sorte que la première extrémité (52) du guide coupe le plan de mâchoire.

10. L'applicateur de n'importe lesquelles des revendications 4 à 9, où l'élément de distribution est commandé par l'actionneur, l'actionneur déplaçant la mâchoire d'applicateur pouvant pivoter (20) jusqu'à la position fermée dans un premier mouvement, et commandant l'élément de distribution dans un deuxième mouvement suivant le premier mouvement.

11. L'applicateur de n'importe lesquelles des revendications 4 à 10, où l'élément de distribution comprend un cliquet élastique (70) supporté de manière à coulisser sur un arbre (78) et sollicité en direction des mâchoires d'applicateur (18, 20) par un élément de sollicitation de cliquet (82).

12. L'applicateur de la revendication 11, où le guide-étiquette (50) inclut une fente de guide conçue pour guider le cliquet coulissant (70) vers les mâchoires d'applicateur (18, 20), et où le cliquet est supporté de manière à pouvoir tourner sur l'arbre (78) et la fente de guide inclut une portion de libération au niveau d'une extrémité de celle-ci, la portion de libération étant substantiellement perpendiculaire à la fente de guide afin de permettre le pivotement sélectif du cliquet sur l'arbre hors de prise avec les étiquettes.

13. L'applicateur de soit la revendication 11, soit la revendication 12, où l'actionneur inclut une came (90) conçue pour forcer l'élément de distribution à s'éloigner des mâchoires d'applicateur (18, 20) durant le premier mouvement à l'encontre de la force de l'élément de sollicitation de cliquet (82).

14. L'applicateur de la revendication 13, où la came (90) est allongée et a une première extrémité (92) attachée à l'actionneur et une deuxième extrémité (94) à distance de l'actionneur et conçue pour agir sur l'élément de distribution, et la came a une première surface de came (96) à proximité de la première extrémité de la came, et une deuxième surface de came (98) à proximité de la deuxième extrémité de la came, la came fonctionnant dans un plan de came (Y), la première surface de came se situant à un premier angle relativement au plan de came, et la deuxième surface de came se situant à un deuxième angle relativement au plan de came, et le deuxième angle étant supérieur au premier angle.
